# EUROPÄISCHE PATENTSCHRIFT

(11) **EP 1 959 059 B1**
(45) Veröffentlichungstag und Bekanntmachung des Hinweises auf die Patenterteilung: **29.12.2010**
(21) Anmeldenummer: 08101625.5
(22) Anmeldetag: 14.02.2008
(51) Int. Cl.: E03C 1/04, E03C 1/08

(54) **Wasserarmatur**
Water fixture
Robinetterie d'eau

(30) Priorität: 16.02.2007 DE 202007002345 U
(43) Veröffentlichungstag der Anmeldung: 20.08.2008
(73) Patentinhaber: Reich KG, Regel- und Sicherheitstechnik, 35713 Eschenburg-Wissenbach (DE)
(72) Erfinder: Bender, Steffen, 35713, Eschenburg (DE); Krämer, Rabea, 35713, Eschenburg (DE)
(74) Vertreter: Hofstetter, Alfons J.

(56) Entgegenhaltungen:
- GB-A- 2 134 182
- JP-A- 2002 294 775
- US-B1- 6 393 192

## Beschreibung

Die vorliegende Erfindung betrifft eine Wasserarmatur gemäß dem Oberbegriff des Anspruchs 1.

Wasserarmaturen mit einem transparenten oder transluzentem Strahlregler im Wasserauslauf und einem darin angeordneten Leuchtmittel sind bekannt, siehe z.B. US6393192, JP2002 294775. Bei derartigen Wasserarmaturen soll der Strahlregler und insbesondere der austretende Wasserstrahl effektvoll beleuchtet werden. Bei bekannten Wasserarmaturen geschieht das Einschalten des Leuchtmittels üblicherweise durch eine, teilweise integriert ausgeführte Vorschaltelektronik, die mittels einer Leitwertermittlung das Vorhandensein von Wasser bei geöffneter Armatur erkennt und in diesem Zustand das Leuchtmittel mit elektrischer Spannung versorgt. Nachteilig an diesen bekannten Wasserarmaturen mit beleuchteten Strahlreglern sind jedoch die erheblichen Mehrkosten für die verwendete Vorschaltelektronik. Zudem ergeben sich Probleme beim Einbau der entsprechenden Vorschaltelektronik, insbesondere in Caravans bzw. Motorcaravans und Wohnwagen, da hier nur ein sehr begrenztes Platzangebot vorhanden ist.

Dokument GB2067724 beschreibt eine Wasserarmatur für den Einsatz in einem Wohnwagen, mit einem Mikroschalter zum Ein- und Auschalten einen Tauchpumpe. Diese Dokument entspricht dem Oberbegriff des Anspruchs 1.

Es ist daher Aufgabe der vorliegenden Erfindung, eine gattungsgemäße Wasserarmatur, insbesondere für den Einsatz in einem Wohnwagen, Caravan oder Motorcaravan, bereitzustellen, die kostengünstig ist und einfach sowie platz- und raumsparend eingebaut werden kann.

Gelöst wird diese Aufgabe durch eine Wasserauslaufarmatur mit den Merkmalen des Anspruchs 1.

Vorteilhafte Ausgestaltungen sind in den Unteransprüchen beschrieben.

Eine erfindungsgemäße Wasserarmatur, insbesondere für den Einsatz in einem Wohnwagen, Caravan oder Motorcaravan weist einen Mikroschalter zum Ein- und Ausschalten einer Tauchpumpe sowie ein Wasserauslaufrohr mit einem Wasserauslauf auf, wobei im Wasserauslauf ein Strahlregler aus transparentem oder transluzentem Material mit mindestens einem Leuchtmittel angeordnet ist. Erfindungsgemäß ist das Leuchtmittel zur Spannungsversorgung über eine elektrische Leitung direkt mit dem Mikroschalter verbunden. Vorteilhafterweise wird bei der erfindungsgemäßen Wasserarmatur der bereits vorhandene Mikroschalter zum Ein- und Ausschalten der Tauchpumpe genutzt, um das Leuchtmittel direkt mit Spannung zu versorgen. Der Mikroschalter ist dabei mit einer Spannungsquelle verbunden und versorgt gleichzeitig die Tauchpumpe und das Leuchtmittel mit Spannung. Durch einen derartigen erfindungsgemäßen Aufbau kann auf eine übliche Vorschaltelektronik verzichtet werden, so dass sich die Kosten für eine derartige Wasserarmatur deutlich verringern. Zudem kann die erfindungsgemäße Wasserarmatur einfach sowie platz- und raumsparend eingebaut werden. Auch ein nachträgliches Umrüsten bereits vorhandener Wasserarmaturen ohne beleuchteten Strahlregler ist ohne weiteres möglich.

In einer weiteren vorteilhaften Ausgestaltung der erfindungsgemäßen Wasserarmatur umfasst das Leuchtmittel mindestens eine Leuchtdiode, wobei zwischen der Leuchtdiode und dem Mikroschalter in der elektrischen Leitung ein elektrischer Widerstand angeordnet ist. Der elektrische Widerstand sorgt einerseits für die Versorgung des Leuchtmittels, insbesondere der Leuchtdiode, mit der für das Leuchtmittel geeigneten Spannung, andererseits wird durch den Widerstand ein nahezu konstanter Stromfluss gewährleistet, der im Falle der Leuchtdiode zu einer konstanten Helligkeitsabstrahlung durch dieser beiträgt. Auch andere Leuchtmittel, wie zum Beispiel Glühlampen können verwendet werden.

In einer weiteren vorteilhaften Ausgestaltung der erfindungsgemäßen Wasserarmatur ist der Mikroschalter in einem Einhebelmischer oder einer Mischbatterie angeordnet. Einhebelmischer oder Mischbatterien, die in einem Wohnwagen, Caravan oder Motorcaravan Verwendung finden, besitzen üblicherweise Mikroschalter zur Steuerung einer Tauchpump siehe z.B. GB2067724. Vorteilhafterweise kann ein derartiger Mikroschalter für das Ein- und Ausschalten bzw. die Spannungsversorgung des Leuchtmittels im Strahlregler des Wasserauslaufrohrs der Wasserarmatur verwendet werden.

In einer weiteren vorteilhaften Ausgestaltung der Erfindung ist der Mikroschalter mit der Spannungsquelle des Wohnwagens, Caravans oder Motorcaravans verbunden, wobei zur Spannungsversorgung der Tauchpumpe und des Leuchtmittels eine elektrische Hauptleitung vom Mikroschalter wegführt und die elektrische Hauptleitung in einem vorbestimmten Abstand zum Mikroschalter in eine zum Leuchtmittel führende erste elektrische Leitung und eine zur Tauchpumpe führende zweite elektrische Leitung aufgeteilt ist. Dabei kann das Leuchtmittel mindestens eine Leuchtdiode umfassen, wobei zwischen der Leuchtdiode und dem Mikroschalter in der ersten elektrischen Leitung ein elektrischer Widerstand angeordnet ist. Eine derartige Ausgestaltung der Erfindung ermöglicht eine einfache Montage des Leuchtmittels. Zudem kann die Spannungsversorgung des Leuchtmittels wie auch der Tauchpumpe an die vorhandenen räumlichen Gegebenheiten angepasst werden. Auch eine Anpassung an unterschiedlich ausgebildete Wasserarmaturen, die zum Beispiel einen gemeinsamen Armaturenkörper oder auch getrennt ausgebildeten Armaturenkörper mit verschieden von einander beabstandeten Armaturenelementen aufweisen, ist möglich.

In einer weiteren vorteilhaften Ausgestaltung der erfindungsgemäßen Wasserarmatur sind die zum Leuchtmittel führende elektrische Leitung und eine vom Leuchtmittel abgehende Masseleitung zumindest innerhalb des Wasserauslaufrohrs in einer wasserdichten Umhüllung angeordnet. Dabei kann die Umhüllung schlauchoder rohrförmig ausgebildet sein und beispielsweise aus Silikon bestehen. Eine derartige Umhüllung gewährleistet eine unproblematische Führung der spannungsführenden Elemente innerhalb des Wasserauslaufrohrs oder anderer wasserführender Elemente der Wasserarmatur.

Weitere Einzelheiten, Merkmale und Vorteile der Erfindung sind in den nachfolgend beschriebenen und zeichnerisch dargestellten Ausführungsbeispielen näher erläutert. Es zeigen:
- Figur 1: eine schematische Darstellung einer erfindungsgemäßen Wasserarmatur gemäß einer ersten Ausführungsform;
- Figur 2: eine schematische Darstellung einer erfindungsgemäßen Wasserarmatur gemäß einer zweiten Ausführungsform;
- Figur 3: eine schematische Darstellung eines Endes eines Wasserauslaufrohrs einer erfindungsgemäßen Wasserarmatur gemäß der ersten oder zweiten Ausführungsform;
- Figur 4a: eine schematische Darstellung eines Strahlreglers einer erfindungsgemäßen Wasserarmatur gemäß der ersten oder zweiten Ausführungsform; und
- Figur 4b: eine schematische Darstellung einer weiteren Ansicht des Strahlreglers gemäß Figur 4a.

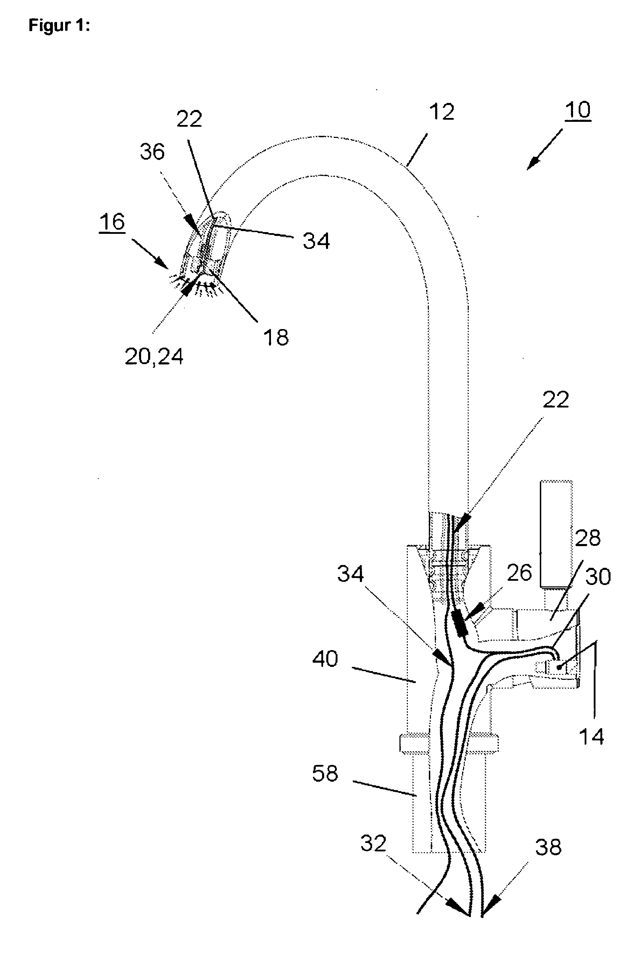

Figur 1 zeigt in einer schematischen Darstellung eine Wasserarmatur 10 gemäß einer ersten Ausführungsform. Eine derartige Wasserarmatur 10 findet insbesondere in Wohnwagen, Caravans oder Motorcaravans oder anderen Orten mit beengten Platz- und Raumverhältnissen Verwendung. Die Wasserarmatur 10 besteht aus einem Armaturenkörper 40 und einem am Armaturenkörper 40 angeordneten Einhebelmischer 28. Der Einhebelmischer 28 ist dabei in bekannter Art und Weise aufgebaut. An dem Armaturenkörper 40 ist zudem an dem einen Wasserzulauf 58 gegenüberliegenden Ende ein Wasserauslaufrohr 12 befestigt. Das Wasserauslaufrohr 12 weist zudem einen Wasserauslauf 16 auf, wobei im Wasserauslauf 16 ein Strahlregler 18 aus transparentem oder transluzentem Material mit einem Leuchtmittel 20 angeordnet ist.

In dem dargestellten Ausführungsbeispiel ist das Leuchtmittel 20 als Leuchtdiode 24 ausgebildet. Zur Spannungsversorgung der Leuchtdiode 24 ist an dieser eine erste elektrische Leitung 22 angeordnet, die zu einem in dem Einhebelmischer 28 angeordneten Mikroschalter 14 verläuft. Dabei ist zwischen der Leuchtdiode 24 und dem Mikroschalter 14 in der elektrischen Leitung 22 ein elektrischer Widerstand 26 angeordnet. Der Mikroschalter 14 dient einerseits zum Ein- und Ausschalten der Leuchtdiode 24 wie auch zum Ein- und Ausschalten einer Tauchpumpe, die in einem Wasserreservoir des Wohnwagens, Caravans oder Motorcaravans angeordnet ist (nicht dargestellt). Man erkennt, dass das Leuchtmittel 20 bzw. die Leuchtdiode 24 zur Spannungsversorgung über die elektrische Leitung 22 direkt mit dem Mikroschalter 14 verbunden ist. Des Weiteren erkennt man, dass der Mikroschalter 14 mit einer Spannungsquelle des Wohnwagens, Caravans oder Motorcaravans über eine elektrische Zuleitung 38 verbunden ist.

Zur Spannungsversorgung der Tauchpumpe und des Leuchtmittels 20 bzw. der Leuchtdiode 24 führt in dem dargestellten Ausführungsbeispiel eine elektrische Hauptleitung 30 vom Mikroschalter 14 weg, wobei die elektrische Hauptleitung 30 in einem vorbestimmten Abstand zum Mikroschalter 14 in die zum Leuchtmittel 20 bzw. der Leuchtdiode 24 führende erste elektrische Leitung 22 und eine zur Tauchpumpe führende zweite elektrische Leitung 32 aufgeteilt ist.

Die Spannung der Spannungsquelle des Wohnwagens, Caravans oder Motorcaravans beträgt üblicherweise 12V oder 24 V.

Das Leuchtmittel 20 bzw. die Leuchtdiode 24 weist zudem eine abgehende Masseleitung 34 auf, die mit der Wohnwagen-, Caravan- bzw. Motorcaravanmasse verbunden ist (nicht dargestellt).

Die zum Leuchtmittel 20 bzw. zur Leuchtdiode 24 führende elektrische Leitung 22 und die davon abgehende Masseleitung 34 ist innerhalb des Wasserauslaufrohrs 12 in einer wasserdichten Umhüllung 36 angeordnet. Die wasserdichte Umhüllung 36 besteht dabei in dem dargestellten Ausführungsbeispiel aus einem Silikonschlauch.

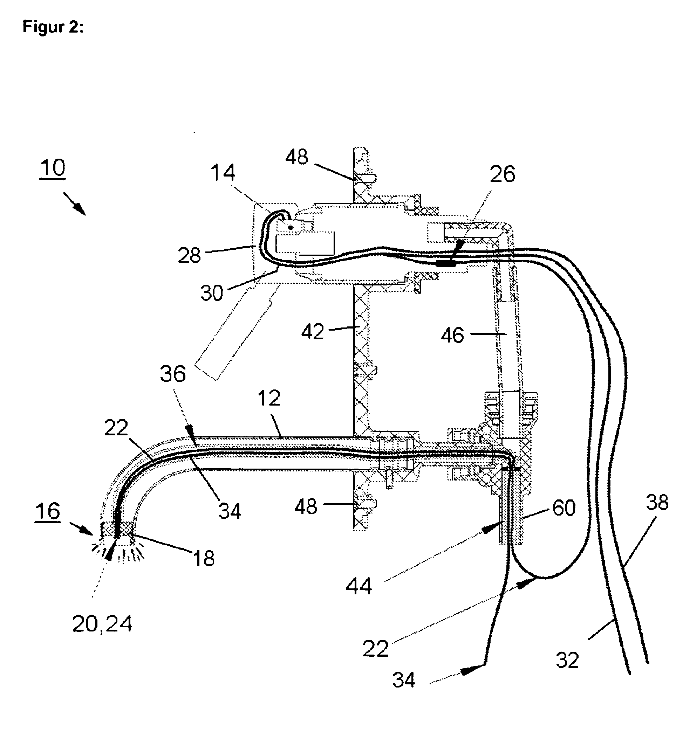

Figur 2 zeigt eine schematische Darstellung der Wasserarmatur 10 gemäß einer zweiten Ausführungsform. Man erkennt, dass im Gegensatz zu dem in Figur 1 dargestellten ersten Ausführungsbeispiel die Wasserarmatur 10 keinen gemeinsamen Armaturenkörper aufweist. Vielmehr sind der Einhebelmischer 28 und das Wasserauslaufrohr 12 getrennt voneinander ausgebildet und über eine Verbindungsleitung 46 wasserleitend miteinander verbunden. Der Einhebelmischer 14 sowie das Wasserauslaufrohr 12 sind dabei in einem Montageelement 42 angeordnet, wobei das Montageelement 42 zum Wandeinbau ausgebildet ist. Hierfür sind Befestigungsvorrichtungen 48 vorgesehen.

Auch in diesem dargestellten Ausführungsbeispiel ist das Leuchtmittel 20 als Leuchtdiode 24 ausgebildet. Man erkennt, dass die Leuchtdiode 24 zur Spannungsversorgung wiederum über die elektrische Leitung 22 direkt mit dem Mikroschalter 14 verbunden ist. Dabei führt wiederum die elektrische Hauptleitung 30 vom Mikroschalter 14 weg und teilt sich in einem vorbestimmten Abstand zum Mikroschalter 14 in die zum Leuchtmittel 20 bzw. der Leuchtdiode 24 führende erste elektrische Leitung 22 mit dem elektrischen Widerstand 26 und die zur Tauchpumpe führende zweite elektrische Leitung 32. Zudem ist am Mikroschalter 14 die elektrische Zuleitung 38 angeordnet, wobei die elektrische Zuleitung 38 mit der Spannungsquelle des Wohnwagens, Caravans oder Motorcaravans verbunden ist.

Des Weiteren erkennt man, dass die erste elektrische Leitung 22 und die Masseleitung 34 wiederum in einem Silikonschlauch 36 innerhalb des Wasserauslaufrohrs 12 geführt sind. Da die in dem vorliegenden Ausführungsbeispiel beschriebene Wasserarmatur 10 jedoch weitere wasserführende Elemente aufweist, ist der Silikonschlauch 36 nicht nur innerhalb des Wasserauslaufrohrs 12, sondern auch in den anderen wasserführenden Elementen der Wasserarmatur 10 ausgebildet und führt zu einem mit einer Dichtmasse 44 ausgebildeten Anschlussstutzen 60. Die Masseleitung 34 des Leuchtmittels 20 bzw. der Leuchtdiode 24 ist wiederum mit der Wohnwagen-, Caravan- oder Motorcaravanmasse verbunden.

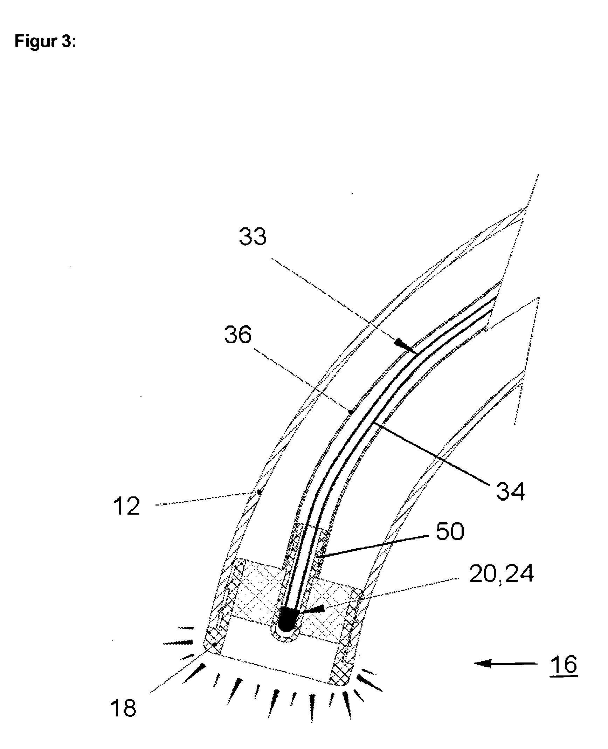

Figur 3 zeigt eine schematische Darstellung eines Endes des Wasserauslaufrohrs 12 der Wasserarmatur 10 gemäß der ersten oder zweiten Ausführungsform. Man erkennt, dass der Strahlregler bzw. Perlator 18 am Wasserauslauf 16 des Wasserauslaufrohrs 12 angeordnet ist. In dem dargestellten Ausführungsbeispiel ist der Strahlregler 18 am Wasserauslauf 16 in das Wasserauslaufrohr 12 gesteckt. Man erkennt, dass das Leuchtmittel 20 bzw. die Leuchtdiode 24 innerhalb des transparent oder transluzent ausgebildeten Strahlreglers 18 angeordnet ist. Zur Spannungsversorgung ist die Leuchtdiode 24 mit der ersten elektrischen Leitung 22 verbunden. Die Leuchtdiode 24 ist zudem mit der Masseleitung 34 verbunden. Sowohl die erste elektrische Leitung 22 wie die Masseleitung 34 sind innerhalb der Umhüllung 36 angeordnet. Das wasserauslaufseitige Ende der Umhüllung 36 ist an einem Anschlussstutzen 50 des Strahlreglers 18 befestigt.

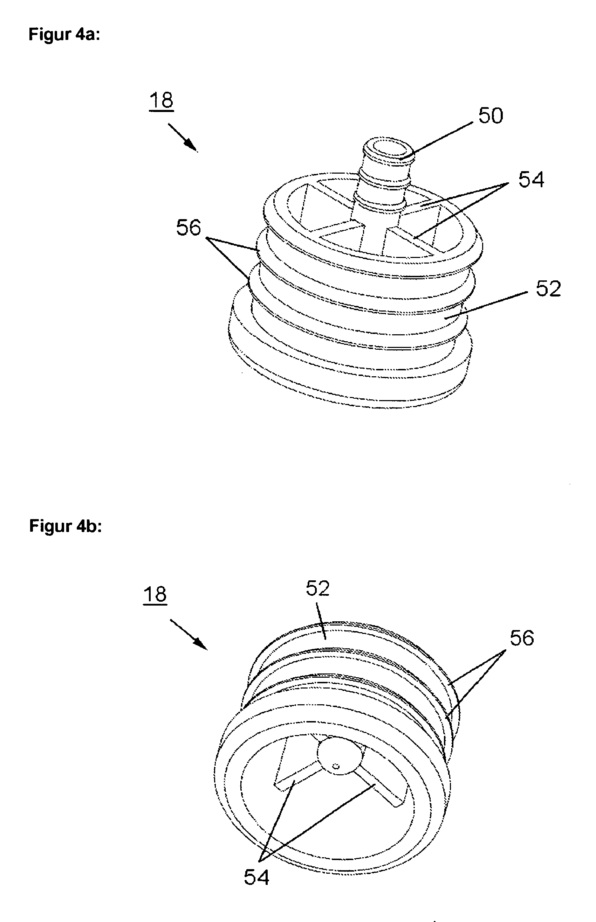

Die Figuren 4a und 4b zeigen schematische Darstellungen des Strahlreglers 18 der Wasserarmatur 10 gemäß der ersten oder zweiten Ausführungsform. Der Strahlregler 18 besteht dabei aus einem zylinderförmig ausgebildeten Strahlreglerkörper 42 sowie dem Anschlussstutzen 50. Zwischen dem Anschlussstutzen 50 und dem Strahlreglerkörper 52 sind mehrere Stege 54 ausgebildet. Am Außenumfang des Strahlreglerkörpers 52 sind zudem mehrere umlaufende Rippen 56 ausgebildet, die zur Verrastung des Strahlreglers 18 innerhalb des Wasserauslaufrohrs 12 dienen. Am Anschlussstutzen 50 ist die Umhüllung 36 befestigt. Innerhalb des hohlförmig ausgebildeten Anschlussstutzens 50 ist das Leuchtmittel 20 bzw. die Leuchtdiode 24 angeordnet. Der gesamte Strahlregler 18 besteht dabei aus einem transparenten oder transluzentem Material.

## Patentansprüche

1. Wasserarmatur, insbesondere für den Einsatz in einem Wohnwagen, Caravan oder Motorcaravan, mit einem Mikroschalter (14) zum Ein- und Ausschalten einer Tauchpumpe und einem Wasserauslaufrohr (12) mit einem Wasserauslauf (16),
**dadurch gekennzeichnet, dass** im Wasserauslauf (16) ein Strahlregler (18) aus transparentem oder transluzentem Material mit mindestens einem Leuchtmittel (20) angeordnet ist, und dass
das Leuchtmittel (20) zur Spannungsversorgung über eine elektrische Leitung (22) direkt mit dem Mikroschalter (14) verbunden ist.

2. Wasserarmatur nach Anspruch 1,
**dadurch gekennzeichnet,**
**dass** das Leuchtmittel (20) mindestens eine Leuchtdiode (24) umfasst und das zwischen der Leuchtdiode (24) und dem Mikroschalter (14) in der elektrischen Leitung (22) ein elektrischer Widerstand (26) angeordnet ist.

3. Wasserarmatur nach einem der vorhergehenden Ansprüche,
**dadurch gekennzeichnet,**
**dass** der Mikroschalter (14) in einem Einhebelmischer (28) oder einer Mischbatterie angeordnet ist.

4. Wasserarmatur nach einem der vorhergehenden Ansprüche,
**dadurch gekennzeichnet,**
**dass** der Mikroschalter (14) mit einer Spannungsquelle des Wohnwagens, Caravans oder Motorcaravans verbunden ist und zur Spannungsversorgung der Tauchpumpe und des Leuchtmittels (20) eine elektrische Hauptleitung (30) vom Mikroschalter (14) wegführt, wobei die elektrische Hauptleitung (30) in einem vorbestimmten Abstand zum Mikroschalter (14) in eine zum Leuchtmittel (20) führende erste elektrische Leitung (22) und eine zur Tauchpumpe führende zweite elektrische Leitung (32) aufgeteilt ist.

5. Wasserarmatur nach Anspruch 4,
**dadurch gekennzeichnet,**
**dass** das Leuchtmittel (20) mindestens eine Leuchtdiode (24) umfasst und das zwischen der Leuchtdiode (24) und dem Mikroschalter (14) in der ersten elektrischen Leitung (22) ein elektrischer Widerstand (26) angeordnet ist.

6. Wasserarmatur nach einem der vorhergehenden Ansprüche,
**dadurch gekennzeichnet,**
**dass** die zum Leuchtmittel (20) führende elektrische Leitung (22) und eine vom Leuchtmittel (20) abgehende Masseleitung (34) zumindest innerhalb des Wasserauslaufrohrs (12) in einer wasserdichten Umhüllung (36) angeordnet sind.

7. Wasserarmatur nach 6,
**dadurch gekennzeichnet,**
**dass** die Umhüllung (36) schlauch- oder rohrförmig ausgebildet ist.

8. Wasserarmatur nach Anspruch 6 oder 7,
**dadurch gekennzeichnet,**
**dass** die Umhüllung (36) aus Silikon besteht.

9. Wasserarmatur nach einem der vorhergehenden Ansprüche,
**dadurch gekennzeichnet,**
**dass** die Spannung der Spannungsquelle des Wohnwagens, Caravans oder Motorcaravans 12V oder 24 V beträgt.

## Claims

1. Water fitting, in particular for the employment in a camper, caravan or motor caravan, including a micro-switch (14) for switching on and off a submerged pump, and a water outlet pipe (12) with a water outlet (16),
**characterized in that**
an aerator (18) of transparent or translucent material with at least one illuminant (20) is disposed in the water outlet (16), and that the illuminant (20) is directly connected to the micro-switch (14) through an electrical line (22) for voltage supply.

2. Water fitting according to claim 1,
**characterized in that**
the illuminant (20) includes at least one light emitting diode (24) and an electrical resistance (26) is disposed in the electrical line (22) between the light emitting diode (24) and the micro-switch (14).

3. Water fitting according to anyone of the preceding claims,
**characterized in that**
the micro-switch (14) is disposed in a single-lever mixer (28) or a mixing tap.

4. Water fitting according to anyone of the preceding claims,
**characterized in that**
the micro-switch (14) is connected to a voltage source of the camper, caravan or motor caravan, and for voltage supply of the submerged pump and the illuminant (20), an electrical main line (30) leads away from the micro-switch (14), wherein the electrical main line (30) is divided into a first electrical line (22) leading to the illuminant (20) and a second electrical line (32) leading to the submerged pump, in a predetermined distance to, the micro-switch (14).

5. Water fitting according to claim 4,
**characterized in that**
the illuminant (20) includes at least one light emitting diode (24) and an electrical resistance (26) is disposed in the first electrical line (22) between the light emitting diode (24) and the micro-switch (14).

6. Water fitting according to anyone of the preceding claims,
**characterized in that**
the electrical line (22) leading to the illuminant (20) and a ground line (34) outgoing from the illuminant (20) are disposed in a water-proof sheath (36) at least within the water outlet pipe (12).

7. Water fitting according to claim 6,
**characterized in that**
the sheath (36) is formed tube- or pipe-shaped.

8. Water fitting according to claim 6 or 7,
**characterized in that**
the sheath (36) is made of silicone.

9. Water fitting according to anyone of the preceding claims,
**characterized in that**
the voltage of the voltage source of the camper, caravan or motor caravan is 12 V or 24 V.

## Revendications

1. Robinet d'eau, en particulier pour une utilisation dans une caravane, un camping-car ou un camping-car motorisé, avec un commutateur miniature (14) pour allumer et éteindre une pompe submersible et un tuyau d'écoulement d'eau (12) avec une sortie d'eau (16),
**caractérisé en ce qu'**un régulateur de jet (18) fabriqué dans un matériau transparent ou translucide et comportant au moins une lampe (20) est placé dans la sortie d'eau (16) et que la lampe (20) est reliée directement au commutateur miniature (14) par une ligne électrique (22) pour l'alimentation électrique.

2. Robinet d'eau selon la revendication 1,
**caractérisé en ce que**
la lampe (20) comprend au moins une diode électroluminescente (24) et qu'une résistance électrique (26) est placée dans la ligne électrique (22) entre la diode électroluminescente (24) et le commutateur miniature (14).

3. Robinet d'eau selon une des revendications précédentes,
**caractérisé en ce que**
le commutateur miniature (14) est placé dans un mitigeur (28) ou un mélangeur.

4. Robinet d'eau selon une des revendications précédentes,
**caractérisé en ce que**
le commutateur miniature (14) est relié à une source d'alimentation de la caravane, du camping-car ou du camping-car motorisé et que l'alimentation électrique de la pompe submersible et de la lampe (20) est assurée par une ligne électrique principale (30) partant du commutateur miniature (14), la ligne électrique principale (30) se divisant, à une distance prédéfinie du commutateur miniature (14), en une première ligne électrique (22) conduisant à la lampe (20) et en une deuxième ligne électrique (32) conduisant à la pompe submersible.

5. Robinet d'eau selon la revendication 4,
**caractérisé en ce que**
la lampe (20) comprend au moins une diode électroluminescente (24) et qu'une résistance électrique (26) est placée dans la première ligne électrique (22) entre la diode électroluminescente (24) et le commutateur miniature (14).

6. Robinet d'eau selon une des revendications précédentes,
**caractérisé en ce que**
la ligne électrique (22) conduisant à la lampe (20) et une ligne de terre (34) partant de la lampe (20) sont placées, du moins à l'intérieur du tuyau d'écoulement d'eau (12), dans une enveloppe (36) étanche.

7. Robinet d'eau selon la revendication 6,
**caractérisé en ce que**
l'enveloppe (36) est sous forme de tuyau ou de tube.

8. Robinet d'eau selon la revendication 6 ou 7,
**caractérisé en ce que**
l'enveloppe (36) est en silicone.

9. Robinet d'eau selon une des revendications précédentes,
**caractérisé en ce que**
la tension de la source d'alimentation de la caravane, du camping-car ou du camping-car motorisé est de 12 V ou 24 V.
